# EUROPÄISCHE PATENTSCHRIFT

(11) **EP 3 273 134 B1**
(45) Veröffentlichungstag und Bekanntmachung des Hinweises auf die Patenterteilung: **12.02.2020**
(21) Anmeldenummer: 17192186.9
(22) Anmeldetag: 20.09.2017
(51) Int. Cl.: F16N 3/04, B62J 31/00, F16H 57/05, B05C 1/04, F16N 9/00

(54) **VORRICHTUNG FÜR DIE AUFBRINGUNG VON ÖL AUF EINE KETTE EINES ZWEIRADES, INSBESONDERE EINES FAHRRADES**
DEVICE FOR APPLYING OIL TO A CHAIN OF A TWO-WHEELED VEHICLE, IN PARTICULAR A BICYCLE
DISPOSITIF D'APPLICATION DE L'HUILE SUR UNE CHAÎNE D'UN VÉHICULE À DEUX ROUES, EN PARTICULIER D'UN VÉLO

(30) Priorität: 20.07.2016 DE 202016103943 U; 22.12.2016 DE 202016107296 U
(43) Veröffentlichungstag der Anmeldung: 24.01.2018
(73) Patentinhaber: SKS metaplast Scheffer-Klute GmbH, 59846 Sundern (DE)
(72) Erfinder: Kordes, Sven, 59846 Sundern (DE); Grabski, Karsten, 59469 Ense (DE); Schweineberg, Rolf, 59759 Arnsberg (DE)
(74) Vertreter: Schäperklaus, Jochen

(56) Entgegenhaltungen:
- WO-A1-2014/036351
- DE-A1-102010 043 383
- JP-U- S4 724 769
- US-A- 840 345

## Beschreibung

Die vorliegende Erfindung betrifft eine Vorrichtung für die Aufbringung von Öl auf eine Kette eines Zweirades, insbesondere eines Fahrrades, umfassend einen Behälter für das aufzubringende Öl, einen Auslass, durch den das Öl aus dem Behälter austreten kann, Aufbringmittel, die so gestaltet sind, dass sie während einer Bewegung der Vorrichtung relativ zu der Kette in Längsrichtung der Kette den Auslass wiederholt öffnen und schließen, so dass das in dem Behälter befindliche Öl portionsweise auf die Kette aufgebracht wird, wobei die Aufbringmittel ein bewegbares Teil umfassen, das von, insbesondere hervorstehenden, Teilen der Kette bewegt, vorzugsweise von der Kette wegbewegt, werden kann, so dass dadurch der Auslass geöffnet wird, sowie ein Ventil, das den Auslass bildet.

Vorrichtungen für die Aufbringung von Öl auf die Kette eines Fahrrades sind beispielsweise mit Öl gefüllte deformierbare Behälter, die eine Öffnung aufweisen, aus der Öl austreten kann, beispielsweise wenn der Benutzer den Behälter zusammendrückt. Wenn gleichzeitig die Kette längs der Öffnung bewegt wird, wird auf mehrere Abschnitte der Kette Öl aufgebracht. Als nachteilig dabei erweist sich, dass das Öl in der Regel ungleichmäßig aufgebracht wird, so dass beispielsweise auf manche Abschnitte der Kette zu viel Öl und auf andere Abschnitte der Kette eventuell gar kein Öl aufgebracht wird.

Die US 840 345 A sowie die WO 2014/036351 A1 offenbaren Vorrichtungen für die Aufbringung von Öl auf eine Kette eines Zweirades, insbesondere eines Fahrrades. Diese Vorrichtungen weisen einen Behälter für das aufzubringende Öl, einen Auslass, durch den das Öl aus dem Behälter austreten kann, sowie Aufbringmittel auf, die so gestaltet sind, dass sie während einer Bewegung der Vorrichtung relativ zu der Kette in Längsrichtung der Kette den Auslass wiederholt öffnen und schließen, so dass das in dem Behälter befindliche Öl portionsweise auf die Kette aufgebracht wird. Im Idealfall kann dadurch erreicht werden, dass das Öl sehr gleichmäßig über die Längsrichtung der Kette verteilt wird. Beispielsweise kann dabei jeweils etwa ein Tropfen Öl auf jedes der Kettenglieder der Kette aufgebracht werden.

Aus der DE 10 2010 043 383 A1 ist eine Vorrichtung für die Aufbringung von Öl auf eine Kette eines Zweirades, insbesondere eines Fahrrades, der eingangs genannten Art bekannt, wobei die Aufbringmittel der Vorrichtung ein bewegbares Teil umfassen, das von, insbesondere hervorstehenden, Teilen der Kette bewegt, vorzugsweise von der Kette wegbewegt, werden kann, so dass dadurch der Auslass geöffnet wird.

Das der vorliegenden Erfindung zugrunde liegende Problem ist die Schaffung einer Vorrichtung der eingangs genannten Art, die eine gleichmäßige Aufbringung von Öl auf die Kette eines Fahrrads ermöglicht und mechanisch robust ausgeführt ist.

Dies wird erfindungsgemäß durch eine Vorrichtung mit den Merkmalen des kennzeichnenden Teils des Anspruchs 1 erreicht. Die Unteransprüche betreffen bevorzugte Ausgestaltungen der Erfindung.

Gemäß Anspruch 1 wird vorgeschlagen, dass das Ventil ein Federelement mit einem ersten Federschenkel und einem zweiten Federschenkel umfasst, die so vorgespannt sind, dass sie das bewegbare Teil in die das Ventil schließende erste Stellung überführen, wenn kein externer Druck von der Kette auf das bewegbare Teil ausgeübt wird. Die erfindungsgemäße Vorrichtung zeichnet sich insbesondere durch ihre mechanisch robuste Ausführung aus und ermöglicht eine gleichmäßige Aufbringung von Öl auf die Kette eines Fahrrads.

Insbesondere kann das Ventil in einer ersten Stellung des bewegbaren Teils geschlossen sein und in einer zweiten Stellung des bewegbaren Teils geöffnet sein. Auf diese Weise kann durch eine Bewegung der Kette das bewegbare Teil bewegt und dadurch das Ventil geöffnet oder geschlossen werden.

Es kann vorgesehen sein, dass die Vorrichtung einen Kopf umfasst, in dem das Ventil zumindest teilweise angeordnet ist. Dabei kann das bewegbare Teil in der ersten Stellung so aus dem Kopf oder einem Abschnitt des Kopfes nach unten herausragen, dass es mit einem Abschnitt der Kette in Berührung kommen kann. Insbesondere kann vorgesehen sein, dass die Aufbringmittel so gestaltet sind, dass das bewegbare Teil durch den Kontakt der Vorrichtung mit abwechselnd schmaleren und breiteren Abschnitten der Kette aus der ersten in die zweite Stellung überführt werden kann. Es findet also während des Vorbeibewegens der Kette an der Vorrichtung in Längsrichtung der Kette wiederholt nacheinander ein Öffnen und Schließen des Ventils statt, so dass nach und nach kleine Mengen des Öls auf die Kette aufgebracht werden.

Es besteht die Möglichkeit, dass das bewegbare Teil an seinem in Gebrauchsstellung der Kette zugewandten Ende eine Verdickung und/oder eine abgerundete, insbesondere im Wesentlichen halbkugelförmige, Kontur aufweist, vorzugsweise eine abschnittsweise halbkugelförmige Verdickung, aufweist. Die abgerundete Kontur des bewegbaren Teils kann dabei im Wesentlichen den Außenkonturen typischer Kettenlaschen entsprechen, die ebenfalls in der Regel Kurvenabschnitte aufweisen. Das mit einer abgerundeten Kontur versehene Ende des bewegbaren Teils kann somit gut mit der Kette zusammenwirken.

Vorzugsweise kann das bewegbare Teil integral mit dem Federelement ausgebildet sein. Das bewegbare Teil mit dem Federelement, welches integral mit diesem ausgebildet ist, kann insbesondere ein Spritzgussteil sein, das zum Beispiel aus einem Polyamid hergestellt sein kann. Ein Vorteil dieser Ausführungsform sind insbesondere sehr geringe Herstellungskosten. Dieses kann besonders wichtig sein, da eine solche Vorrichtung häufig ein Einwegartikel ist.

Um einen sicheren Halt des Federelements zu bewirken, wird in einer vorteilhaften Ausführungsform vorgeschlagen, dass an einem freien Ende des zweiten Federschenkels ein Klemmabschnitt ausgebildet ist, mittels dessen das Federelement klemmend innerhalb des Kopfes des Behälters festgelegt ist. Vorzugsweise kann der Klemmabschnitt so ausgebildet sein, dass er unter eine Gewindeflanke eines Innengewindes, das an einer Innenseite des Kopfes ausgebildet ist, greift.

In einer besonders vorteilhaften Ausführungsform besteht die Möglichkeit, dass die beiden Federschenkel im montierten Zustand einen Winkel zwischen etwa 35° und etwa 45° miteinander einschließen. Dadurch wird eine ausreichend hohe mechanische Vorspannung des Federelements erhalten. In einem nicht verbauten Zustand können die beiden Federschenkel insbesondere einen Winkel von etwa 90° miteinander einschließen.

In einer bevorzugten Ausführungsform wird vorgeschlagen, dass das bewegbare Teil an seinem in Gebrauchsstellung der Kette zugewandten Ende ein Verschlussorgan aufweist, das in eine Auslassöffnung des Kopfes eingreift. In einer besonders bevorzugten Ausführungsform kann vorgesehen sein, dass an einer Außenseite des Verschlussorgans eine Anzahl von Riefen ausgebildet ist, die sich in Längsrichtung des Verschlussorgans erstrecken. Diese Riefen des Verschlussorgans können das Vorbeifließen des Öls im geöffneten Zustand des Ventils in vorteilhafter Weise erleichtern.

Es besteht ferner die Möglichkeit, dass das bewegbare Teil einen innenliegenden Kopf aufweist, dessen Außendurchmesser größer als der Innendurchmesser der Auslassöffnung ist, wobei der Kopf in einer geschlossenen Stellung des Ventils an einem inneren Rand der Auslassöffnung anliegt. Durch diese Maßnahme kann die Auslassöffnung sicher verschlossen werden.

Es kann vorgesehen sein, dass die Vorrichtung Führungsmittel umfasst, die bei Bewegung der Vorrichtung relativ zu der Kette in Längsrichtung der Kette die Vorrichtung in einer Stellung halten, in der die Aufbringmittel mit der Kette in Kontakt gelangen können. Insbesondere können die Führungsmittel an den Außenseiten der Kette anliegen und zwei Laschen und/oder eine Aussparung umfassen, durch die sich die Kette hindurch erstrecken kann. Auf diese Weise wird gewährleistet, dass die Kette bei dem Vorbeilaufen an der Vorrichtung mit dem bewegbaren Teil zusammenwirkt, um ein Aufbringen des Öls auf die Kette sicherzustellen.

Es besteht die Möglichkeit, dass die Vorrichtung Vordosiermittel, vorzugsweise in dem Behälter angeordnete Vordosiermittel, umfasst, mit denen insbesondere eine Menge des in dem Behälter befindlichen Öls für den Austritt auf die Kette zur Verfügung gestellt werden kann. Die von den Vordosiermitteln vordosierte Menge des Öls kann etwa derjenigen Menge entsprechen, die für das Ölen einer Kette eines Fahrrads benötigt wird. Damit wird verhindert, dass zu viel Öl auf die Kette aufgebracht wird.

Weitere Merkmale und Vorteile der vorliegenden Erfindung werden deutlich anhand der nachfolgenden Beschreibung bevorzugter Ausführungsbeispiele unter Bezugnahme auf die beiliegenden Abbildungen. Darin zeigen:
- Fig. 1: eine Seitenansicht einer Vorrichtung für die Aufbringung von Öl auf eine Kette eines Zweirades, insbesondere eines Fahrrades, die nicht Gegenstand der vorliegenden Erfindung ist, mit aufgebrachter Schutzkappe;
- Fig. 2: eine um 90° gedrehte Seitenansicht der Vorrichtung gemäß Fig. 1;
- Fig. 3: eine Fig. 1 entsprechende Seitenansicht der Vorrichtung gemäß Fig. 1 ohne Schutzkappe;
- Fig. 4: eine Fig. 2 entsprechende Seitenansicht der Vorrichtung gemäß Fig. 1 ohne Schutzkappe;
- Fig. 5: eine perspektivische Ansicht eines Fahrrads, auf dessen Kette mit der Vorrichtung gemäß Fig. 1 Öl aufgebracht wird;
- Fig. 6: ein Detail gemäß dem Pfeil VI in Fig. 5;
- Fig. 7: eine Seitenansicht einer Kette eines Fahrrads und der Vorrichtung gemäß Fig. 1, wobei die Stellung der Vorrichtung relativ zu der Kette derart ist, dass der Auslass der Vorrichtung geschlossen ist;
- Fig. 8: ein Schnitt gemäß den Pfeilen VIII - VIII in Fig. 7;
- Fig. 9: eine perspektivische Ansicht der Kette und der Vorrichtung gemäß Fig. 1 in einem teilweise geschnittenen Zustand sowie der Stellung gemäß Fig. 7;
- Fig. 10: ein Detail gemäß dem Pfeil X in Fig. 8;
- Fig. 11: eine Seitenansicht der Kette und der Vorrichtung gemäß Fig. 1, wobei die Stellung der Vorrichtung relativ zu der Kette derart ist, dass der Auslass der Vorrichtung geöffnet ist;
- Fig. 12: ein Schnitt gemäß den Pfeilen XII - XII in Fig. 11;
- Fig. 13: eine perspektivische Ansicht der Kette und der Vorrichtung gemäß Fig. 1 in einem teilweise geschnittenen Zustand sowie der Stellung gemäß Fig. 11;
- Fig. 14: ein Detail gemäß dem Pfeil XIV in Fig. 12;
- Fig. 15: eine Seitenansicht einer Vorrichtung für die Aufbringung von Öl auf eine Kette eines Zweirades, insbesondere eines Fahrrades, die gemäß einem bevorzugten Ausführungsbeispiel der vorliegenden Erfindung ausgeführt ist, mit aufgebrachter Schutzkappe;
- Fig. 16: eine um 90° gedrehte Seitenansicht der Vorrichtung gemäß Fig. 15;
- Fig. 17: eine Fig. 15 entsprechende Seitenansicht der Vorrichtung ohne Schutzkappe;
- Fig. 18: eine Fig. 16 entsprechende Seitenansicht der Vorrichtung ohne Schutzkappe;
- Fig. 19: eine perspektivische Ansicht eines Fahrrades, auf dessen Kette mit der Vorrichtung gemäß Fig. 15 Öl aufgebracht wird;
- Fig. 20: ein Detail gemäß dem Pfeil XX in Fig. 19;
- Fig. 21: eine Seitenansicht einer Kette eines Fahrrades und der Vorrichtung gemäß Fig. 15, wobei die Stellung der Vorrichtung relativ zu der Kette derart ist, dass der Auslass der Vorrichtung geschlossen ist;
- Fig. 22: einen Schnitt gemäß den Pfeilen XXII - XXII in Fig. 7;
- Fig. 23: eine perspektivische Ansicht der Kette und der Vorrichtung gemäß Fig. 15 in einem teilweise geschnittenen Zustand sowie der Stellung gemäß Fig. 21 ;
- Fig. 24: ein Detail gemäß dem Pfeil XXIV in Fig. 22;
- Fig. 25: eine Seitenansicht der Kette und der Vorrichtung gemäß Fig. 15, wobei die Stellung der Vorrichtung relativ zu der Kette derart ist, dass der Auslass der Vorrichtung geöffnet ist;
- Fig. 26: einen Schnitt gemäß den Pfeilen XXVI - XXVI in Fig. 25;
- Fig. 27: eine perspektivische Ansicht der Kette und der Vorrichtung gemäß Fig. 15 in einem teilweise geschnittenen Zustand sowie der Stellung gemäß Fig. 25;
- Fig. 28: ein Detail gemäß dem Pfeil XXVIII in Fig. 26,
- Fig. 29: eine perspektivische Ansicht eines bewegbaren Teils und eines Federelements eines Ventils der Vorrichtung gemäß Fig.15 bis 28,
- Fig. 30: eine Unteransicht des bewegbaren Teils gemäß Fig. 29.

In den Figuren sind gleiche beziehungsweise funktional gleiche Teile mit gleichen Bezugszeichen versehen.

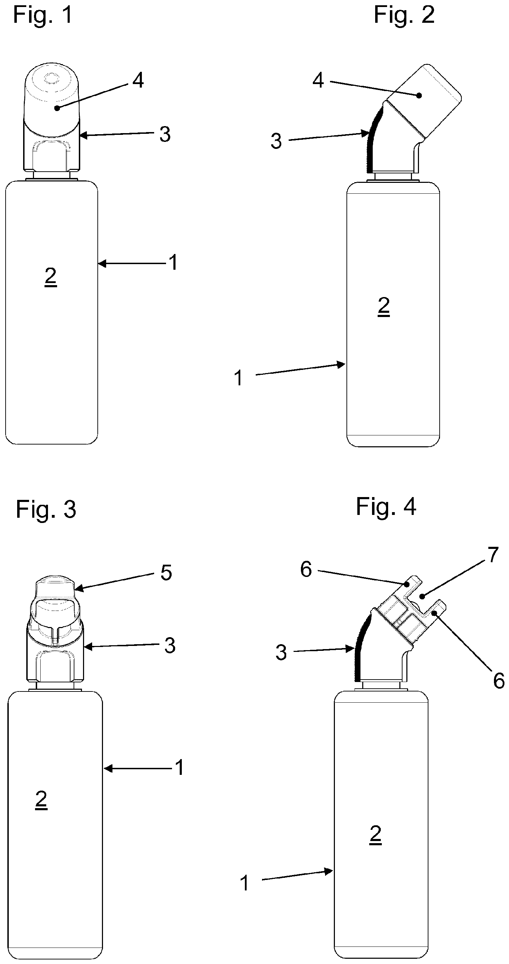

Das in den Figuren 1 bis 14 abgebildete Ausführungsbeispiel einer Vorrichtung 1, die nicht Gegenstand der Erfindung ist, umfasst einen Behälter 2, in dem Öl für eine Kette eines Zweirads bevorratet werden kann. Auf der in Fig. 1 bis Fig. 4 oberen Seite des Behälters 2 ist ein Kopf 3 angeordnet, auf den eine Schutzkappe 4 aufgebracht werden kann (siehe Fig. 1 und Fig. 2).

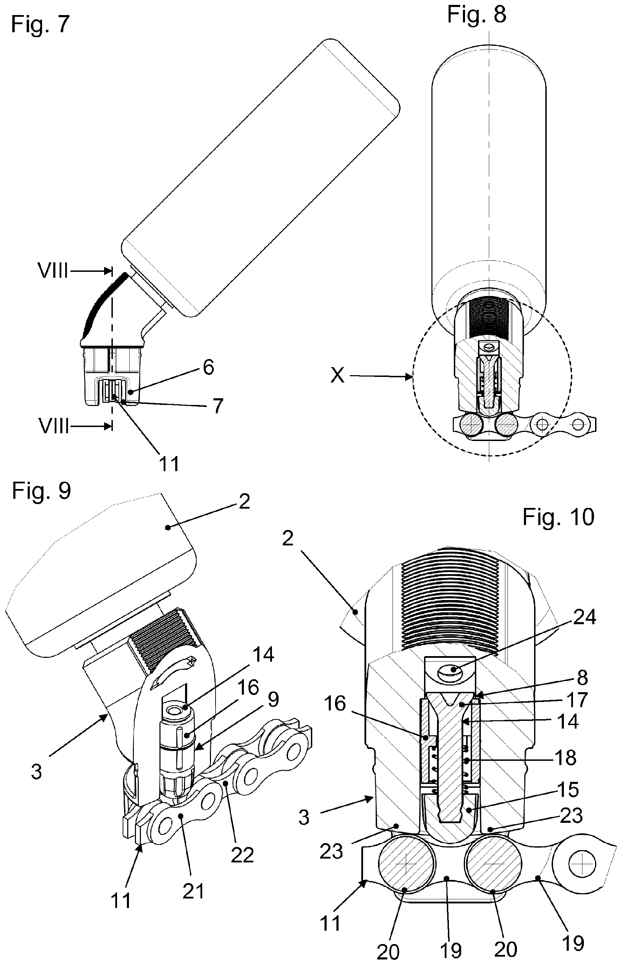

An dem Kopf 3 sind Führungsmittel 5 angeordnet, die im Wesentlichen zwei Führungslaschen 6 umfassen, die zwischen sich eine Aussparung 7 für eine Kette freilassen. Weiterhin sind in dem Kopf 3 ein als Ventil 8 ausgebildeter Auslass (siehe Fig. 10) und Aufbringmittel 9 (siehe Fig. 9) angeordnet, die im Nachfolgenden noch detailliert beschrieben werden.

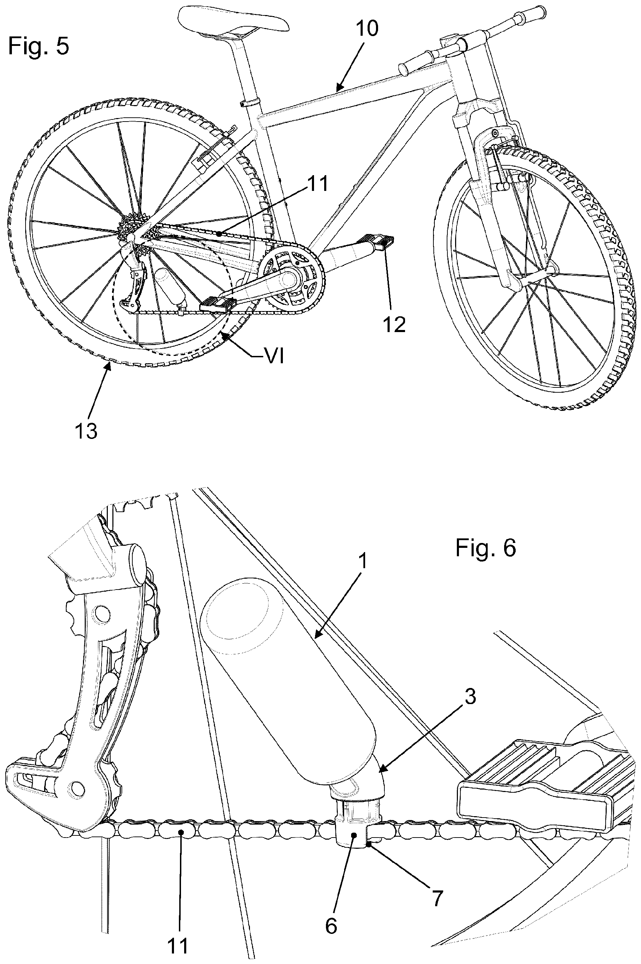

In Fig. 5 und Fig. 6 ist ein Fahrrad 10 abgebildet, auf dessen Kette 11 mit der abgebildeten Ausführungsform der Vorrichtung 1 Öl aufgebracht wird. Dabei wird die Vorrichtung 1 so gehalten, dass der Kopf 3 nach unten zeigt und die Kette 11 sich durch die Aussparung 7 hindurcherstreckt, so dass die beiden Führungslaschen 6 seitlich der Kette 11 angeordnet sind, insbesondere je nach Dicke der Kette 11 teilweise an dieser anliegen.

In dieser Stellung kann die Kette 11 beispielsweise durch Bewegen eines Pedals 12 des Fahrrads 10 relativ zu der Vorrichtung 1 bewegt werden, wobei dann beispielsweise das Hinterrad 13 des Fahrrads 10 angehoben wird, um einen Vortrieb des Fahrrads 10 zu verhindern. Während dieser Relativbewegung bringen die Aufbringmittel 9 Öl auf die Kette 11 auf, wobei nach einem vollständigen Umlauf der Kette 11 die Aufbringung abgeschlossen ist.

Fig. 9 und Fig. 10 zeigen, dass das Ventil 8 ein bewegbares Teil 14 umfasst, dass an seinem von dem Behälter abgewandten beziehungsweise in den Figuren unteren Ende eine abschnittsweise halbkugelförmige Verdickung 15 aufweist. Das bewegbare Teil 14 erstreckt sich durch eine in dem Kopf 3 montierte, von dem Ventil 8 umfasste Hülse 16, aus der das Teil 14 oben und unten heraus ragt. Das Teil 14 ist in axialer Richtung der Hülse 16 bewegbar.

Das obere Ende 17 des bewegbaren Teils 14 ist konisch ausgebildet und weist endseitig einen Außendurchmesser auf, der größer als der Innendurchmesser der Hülse 16 ist. Dadurch kann in der in Fig. 10 abgebildeten unteren Stellung des Teils 14 das Ende 17 so an der Innenwand der Hülse 16 anliegen, dass das Ventil 8 beziehungsweise der von dem Ventil 8 gebildete Auslass geschlossen ist.

Das Ventil 8 umfasst weiterhin eine Feder 18, deren Unterseite an der Oberseite der Verdickung 15 des bewegbaren Teils 14 anliegt. Wenn von unten kein Druck auf die Verdickung 15 ausgeübt wird, drückt die Feder somit das bewegbare Teil 14 nach unten, so dass durch Anlage des Endes 17 des Teils 14 an der Innenwand der Hülse 16 das Ventil 8 beziehungsweise der von dem Ventil 8 gebildete Auslass geschlossen wird.

Eine typische Kette 11 eines Fahrrads 10 weist sich in Längsrichtung der Kette 11 abwechselnde schmalere und breitere Abschnitte 19, 20 der Außen- und Innenlaschen 21, 22 auf (siehe Fig. 9 und Fig. 10).

Bei der in Fig. 10 abgebildeten Stellung ist die abschnittsweise halbkugelförmige Verdickung 15 des bewegbaren Teils 14 im Bereich eines schmaleren Abschnitts 19 der Außen- und Innenlaschen 21, 22 angeordnet, so dass die Kette 11 keinen Druck auf die Verdickung 15 ausübt. Dabei wird eine weitere Bewegung der Kette 11 nach oben durch neben dem bewegbaren Teil 14 angeordnete Vorsprünge 23 des Kopfes 3 verhindert, die an den breiteren Abschnitten 20 der Außen- und Innenlaschen 21, 22 anliegen.

In der Schnittansicht gemäß Fig. 10 ist eine Öffnung 24 ersichtlich, durch die das Öl aus dem Behälter 2 nach unten fließen kann. In der in Fig. 10 abgebildeten geschlossenen Stellung des Ventils 8 kann das in dieser Öffnung 24 befindliche Öl nicht nach unten durch das den Auslass bildende Ventil 8 fließen und die Vorrichtung verlassen. In der Stellung gemäß Fig. 10 tritt somit kein Öl aus der Vorrichtung aus.

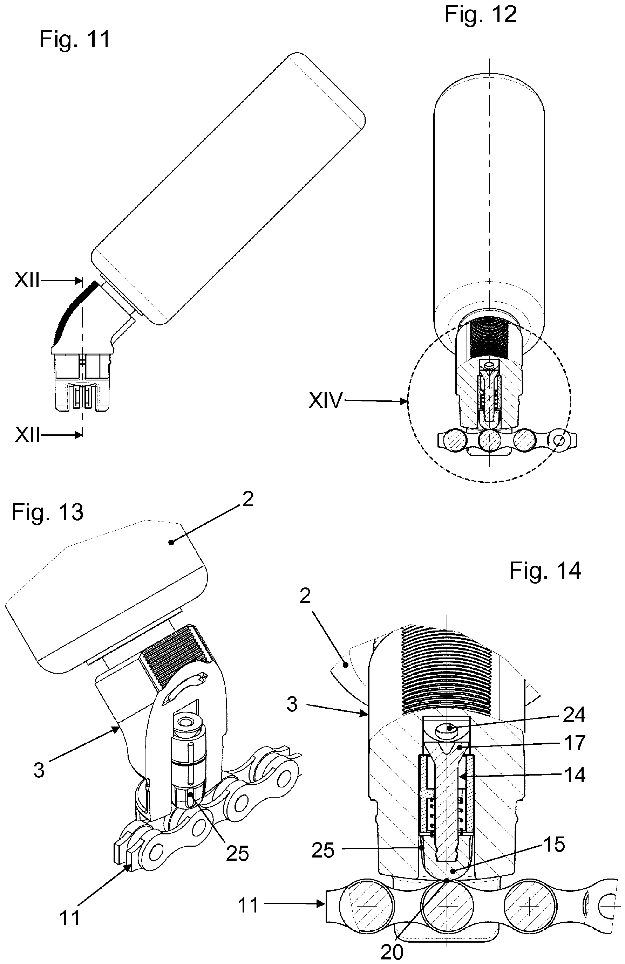

Wenn die Kette 11 in Längsrichtung relativ zu der Vorrichtung 1 bewegt wird, ergibt sich nach der in Fig. 10 abgebildeten Stellung die in Fig. 14 abgebildete Stellung, in der die abschnittsweise halbkugelförmige Verdickung 15 des bewegbaren Teils 14 im Bereich eines breiteren Abschnitts 20 der Außen- und Innenlaschen 21, 22 angeordnet ist. Dieser breitere Abschnitt 20 drückt dann das bewegbare Teil 14 nach oben in Fig. 14, so dass das konische Ende 17 des Teils 14 sich von der der Innenwand der Hülse 16 nach oben bewegt und damit das Ventil 8 beziehungsweise den von dem Ventil 8 gebildeten Auslass öffnet (siehe Fig. 14).

In dieser Stellung kann Öl aus dem Behälter 2 durch die Öffnung 24 in die Hülse 16 eintreten. Aus dem unteren Ende der Hülse 16 tritt das Öl aus und läuft an den Außenseiten der Verdickung 15 des bewegbaren Teils 14 vorbei nach unten auf die Kette 11. Die Verdickung 15 ist dazu mit über den Umfang verteilten Riefen 25 versehen, die das Vorbeifließen des Öls erleichtern.

Das Ventil 8 der Vorrichtung 1 kann insbesondere so gestaltet sein, dass bei einem Vorbeibewegen der Kette 11 an dem Kopf 3 der Vorrichtung 1 beispielsweise jeweils etwa ein Tropfen Öl pro Kettenglied auf die Kette 11 aufgebracht wird. Dazu kann während der Bewegung der Kette 11 relativ zu der Vorrichtung 1 der Benutzer von Hand den Behälter 2 leicht deformieren, um den Ölausfluss zu unterstützen.

Es kann vorgesehen sein, dass die Vorrichtung 1 nicht abgebildete Vordosiermittel umfasst, die insbesondere in dem Behälter 2 angeordnet sind. Die Vordosiermittel können gewährleisten, dass eine Menge des in dem Behälter 2 befindlichen Öls für den Austritt auf die Kette 11 zur Verfügung gestellt und damit vordosiert wird, wobei diese Menge etwa derjenigen Menge entsprechen kann, die für das Ölen einer Kette eines Fahrrads benötigt wird.

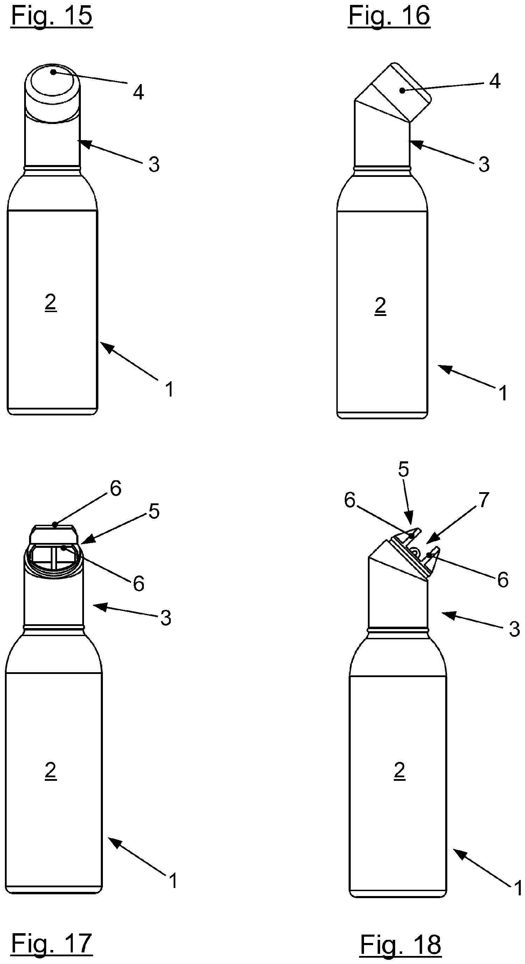

Unter Bezugnahme auf Fig. 15 bis 30 soll nachfolgend ein bevorzugtes erfindungsgemäßes Ausführungsbeispiel einer Vorrichtung 1 für die Aufbringung von Öl auf eine Kette 11 eines Zweirades, insbesondere eines Fahrrades 10, näher erläutert werden.

Die Vorrichtung 1 umfasst einen Behälter 2, in dem Öl für eine Kette 11 eines Zweirades bevorratet werden kann. Auf der in Fig. 15 bis Fig. 18 oberen Seite des Behälters 2 ist ein Kopf 3 angeordnet, auf den eine Schutzkappe 4 aufgebracht werden kann, um den Behälter 2 bei einem Nichtgebrauch verschließen zu können (siehe Fig. 15 und Fig. 16).

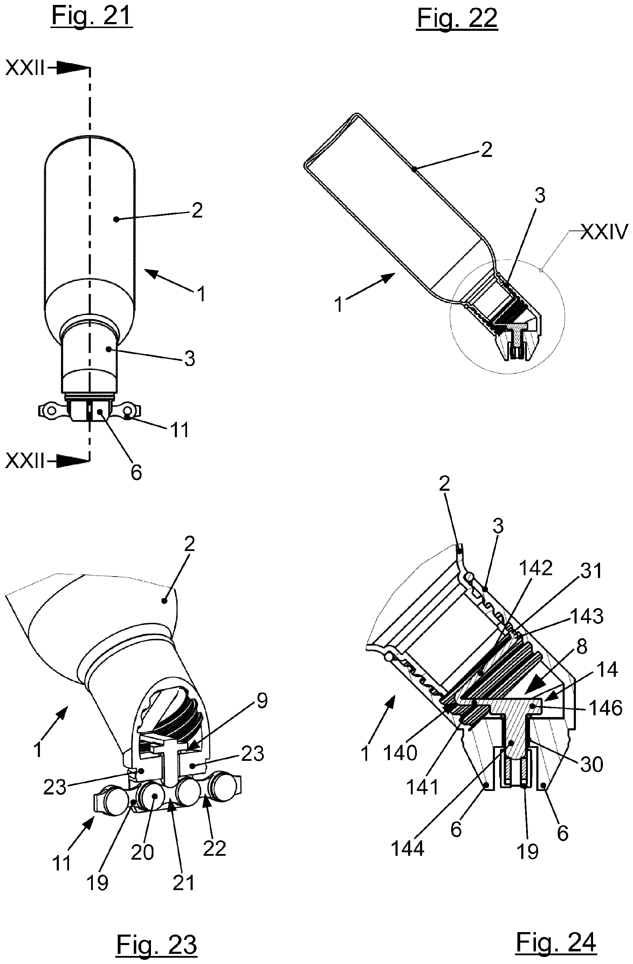

An dem Kopf 3 sind Führungsmittel 5 angeordnet, die in diesem Ausführungsbeispiel ebenfalls im Wesentlichen zwei Führungslaschen 6 umfassen, zwischen denen eine Aussparung 7 für den Eingriff einer Kette 11 des Zweirades ausgebildet ist. Weiterhin sind in dem Kopf 3 ein als Ventil 8 ausgebildeter Auslass (siehe Fig. 24) sowie Aufbringmittel 9 (siehe Fig. 23) angeordnet, die nachfolgend noch näher beschrieben werden.

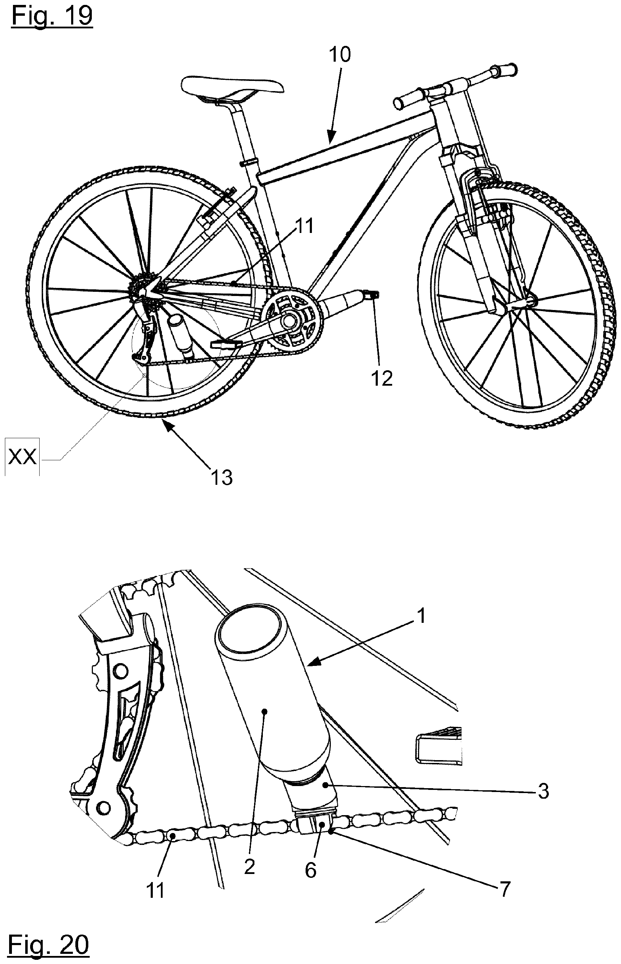

In Fig. 19 und Fig. 20 ist ein Fahrrad 10 dargestellt, auf dessen Kette 11 mit Hilfe der abgebildeten Ausführungsform der Vorrichtung 1 Öl aufgebracht werden kann. Dabei wird die Vorrichtung 1 derart gehalten, dass der Kopf 3 nach unten in Richtung der Kette 11 weist und die Kette 11 sich durch die Aussparung 7 der beiden Führungslaschen 6 hindurcherstreckt, so dass die beiden Führungslaschen 6 seitlich der Kette 11 angeordnet sind, insbesondere je nach Dicke der Kette 11 teilweise auch an dieser anliegen.

In dieser Stellung kann die Kette 11 beispielsweise durch Bewegen eines Pedals 12 des Fahrrads 10 relativ zu der Vorrichtung 1 bewegt werden, wobei dann beispielsweise das Hinterrad 13 des Fahrrads 10 angehoben wird, um einen Vortrieb des Fahrrads 10 zu verhindern. Während dieser Relativbewegung bringen die Aufbringmittel 9 der Vorrichtung 1 Öl auf die Kette 11 auf, wobei nach einem vollständigen Umlauf der Kette 11 die Aufbringung abgeschlossen ist.

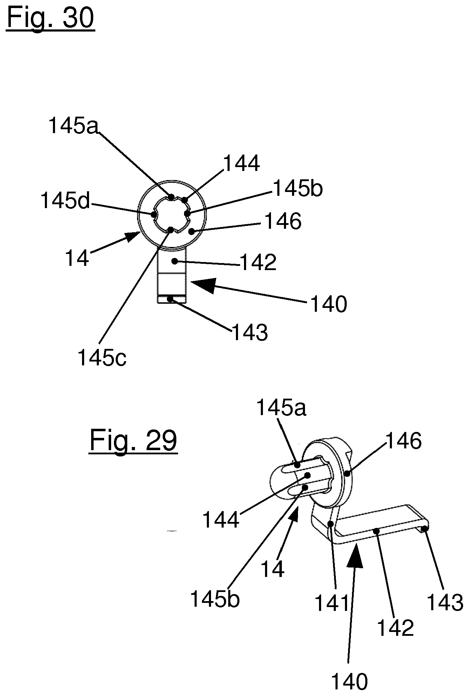

Aus Fig. 23 und Fig. 24 wird deutlich, dass das Ventil 8 ein bewegbares Teil 14 umfasst, mittels dessen der Auslass des Behälters 2 während des Gebrauchs der Vorrichtung 1 geöffnet beziehungsweise verschlossen werden kann. Das bewegbare Teil 14 ist in Fig. 29 und 30 im Detail in einem nicht im Behälter 2 verbauten Zustand gezeigt. Das bewegbare Teil 14 ist in diesem Ausführungsbeispiel integral mit einem Federelement 140 ausgebildet, das einen ersten Federschenkel 141 und einen zweiten Federschenkel 142 umfasst, die in einem nicht verbauten Zustand vorzugsweise einen Winkel von 90° miteinander einschließen. Vorzugsweise ist das bewegbare Teil 14 mit dem integral mit diesem ausgebildeten Federelement 140 ein Spritzgussteil, das insbesondere aus einem Polyamid hergestellt sein kann. Grundsätzlich können das bewegbare Teil 14 und das Federelement 140 auch als separate Bauteile ausgeführt sein, die in geeigneter Weise miteinander verbunden sind.

An einem freien Ende des zweiten Federschenkels 142 ist ein Klemmabschnitt 143 ausgebildet, mittels dessen das Federelement 140 bei der Montage klemmend innerhalb des Kopfes 3 des Behälters 2 festgelegt werden kann. Das bewegbare Teil 14 weist an seinem von dem Behälter 2 abgewandten beziehungsweise in den Figuren Fig. 23 und Fig. 24 unteren Ende ein Verschlussorgan 144 auf, das so geformt ist, dass es in eine Auslassöffnung 30 des Kopfes 3 des Behälters 2 eingesetzt werden kann und im geschlossenen Zustand der Vorrichtung 1, der in Fig. 21 bis 24 gezeigt ist, nach unten aus der Auslassöffnung 30 herausragt. Das bewegbare Teil 14 ist in axialer Richtung der Auslassöffnung 30 bewegbar. Wie in Fig. 29 und 30 zu erkennen, sind an einer Außenseite des Verschlussorgans 144 in Umfangsrichtung verteilt vier Riefen 145a, 145b, 145c, 145d ausgebildet, die sich in Längsrichtung des Verschlussorgans 144 erstrecken. Ferner weist das bewegbare Teil 14 einen kreisrunden Kopf 146 auf, dessen Außendurchmesser größer als der Innendurchmesser der Auslassöffnung 30 ist. Dadurch kann in der in Fig. 24 abgebildeten unteren Stellung des bewegbaren Teils 14 der Kopf so an einem inneren Rand der Auslassöffnung 30 anliegen, dass das Ventil 8 beziehungsweise der von dem Ventil 8 gebildete Auslass der Vorrichtung 1 geschlossen ist.

Im verbauten Zustand greift der Klemmabschnitt 143 unter eine Gewindeflanke eines Innengewindes 31, das an einer Innenseite des Kopfes 3 ausgebildet ist und mittels dessen der Kopf 3 mit dem Behälter 2, der seinerseits ein Außengewinde aufweist, verschraubt ist. Abhängig davon, unter welche der Gewindeflanken des Innengewindes 31 der Klemmabschnitt 143 greift, schließen die beiden Federschenkel 141, 142 einen Winkel zwischen etwa 35° und etwa 45° miteinander ein, so dass durch das Zusammendrücken der beiden Federschenkel 141, 142 eine mechanische Vorspannung erzeugt werden kann, die auf das bewegbare Teil wirkt. In dem hier konkret dargestellten Ausführungsbeispiel beträgt der Winkel zwischen den beiden Federschenkeln 141, 142 im montierten Zustand des Federelements 140 42°. Wenn von unten kein Druck auf das Verschlussorgan 144 ausgeübt wird, drückt das Federelement 140 aufgrund der mechanischen Vorspannung der beiden Federschenkel 141, 142 das bewegbare Teil 14 nach unten, so dass durch die Anlage des kreisrunden Kopfes 146 am inneren Rand der Auslassöffnung 30 der von dem Ventil 8 gebildete Auslass der Vorrichtung 1 geschlossen wird.

Eine typische Kette 11 eines Fahrrads 10 weist sich in Längsrichtung der Kette 11 abwechselnde schmalere und breitere Abschnitte 19, 20 der Außen- und Innenlaschen 21, 22 auf (siehe Fig. 23). Bei der in Fig. 23 und 24 abgebildeten Stellung ist das Verschlussorgan 144 des bewegbaren Teils 14 im Bereich eines schmaleren Abschnitts 19 der Außen- und Innenlaschen 21, 22 angeordnet, so dass die Kette 11 keinen Druck auf das Verschlussorgan 144 ausübt. Dabei wird eine weitere Bewegung der Kette 11 nach oben durch neben dem Verschlussorgan 144 des bewegbaren Teils 14 angeordnete Vorsprünge 23 des Kopfes 3 verhindert, die an den breiteren Abschnitten 20 der Außen- und Innenlaschen 21, 22 anliegen.

In der in Fig. 22 bis 24 abgebildeten geschlossenen Stellung des Ventils 8 kann kein Öl unten aus der Auslassöffnung 30 fließen und aus der Vorrichtung 1 austreten.

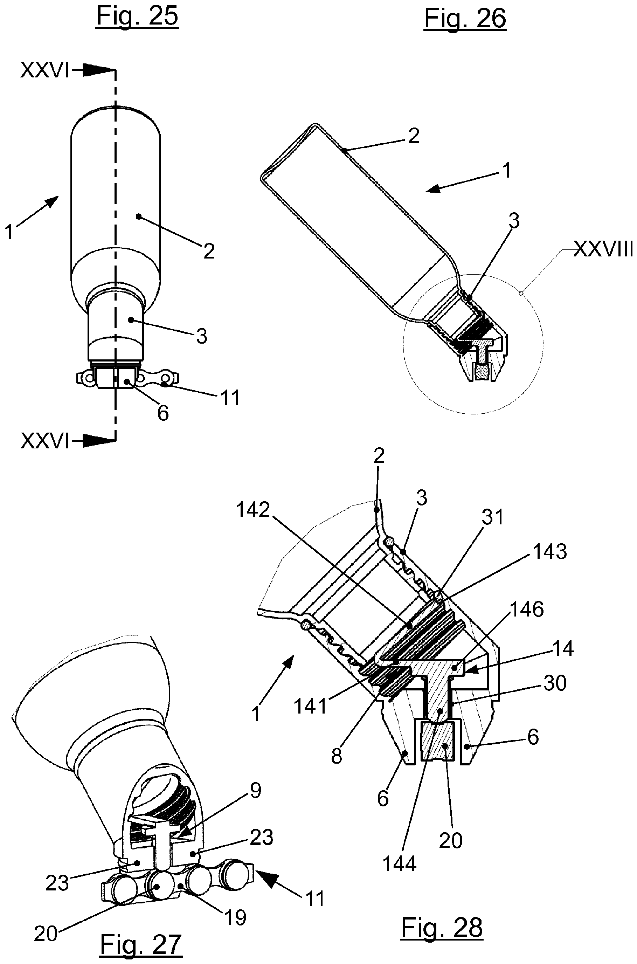

Wenn die Kette 11 in Längsrichtung relativ zu der Vorrichtung 1 bewegt wird, ergibt sich nach der in Fig. 21 bis 24 abgebildeten Stellung die in Fig. 25 bis 28 abgebildete Stellung, in der das Verschlussorgan 144 des bewegbaren Teils 14 im Bereich eines breiteren Abschnitts 20 der Außen- und Innenlaschen 21, 22 angeordnet ist. Dieser breitere Abschnitt 20 drückt dann von unten gegen das Verschlussorgan 144 des bewegbaren Teils 14, so dass sich das Ventil 8 öffnet. In dieser Stellung läuft das Öl an der Außenseite des Verschlussorgans 144 des bewegbaren Teils 14 vorbei nach unten auf die Kette 11. Die Riefen 145a, 145b, 145c, 145d des Verschlussorgans 144 erleichtern dabei das Vorbeifließen des Öls.

Es kann auch in diesem Ausführungsbeispiel vorgesehen sein, dass die Vorrichtung 1 nicht explizit dargestellte Vordosiermittel umfasst, die insbesondere in dem Behälter 2 angeordnet sind. Die Vordosiermittel können gewährleisten, dass eine Menge des in dem Behälter 2 befindlichen Öls für den Austritt auf die Kette 11 zur Verfügung gestellt und damit vordosiert wird, wobei diese Menge etwa derjenigen Menge entsprechen kann, die für das Ölen einer Kette eines Fahrrads benötigt wird.

## Patentansprüche

1. Vorrichtung (1) für die Aufbringung von Öl auf eine Kette (11) eines Zweirades, insbesondere eines Fahrrades (10), umfassend
- einen Behälter (2) für das aufzubringende Öl,
- einen Auslass, durch den das Öl aus dem Behälter (2) austreten kann,
- Aufbringmittel (9), die so gestaltet sind, dass sie während einer Bewegung der Vorrichtung (1) relativ zu der Kette (11) in Längsrichtung der Kette (11) den Auslass wiederholt öffnen und schließen, so dass das in dem Behälter (2) befindliche Öl portionsweise auf die Kette (11) aufgebracht wird, wobei die Aufbringmittel (9) ein bewegbares Teil (14) umfassen, das von, insbesondere hervorstehenden, Teilen der Kette (11) bewegt, vorzugsweise von der Kette (11) wegbewegt, werden kann, so dass dadurch der Auslass geöffnet wird, sowie
- ein Ventil (8), das den Auslass bildet,
**dadurch gekennzeichnet, dass** das Ventil (8) ein Federelement (140) mit einem ersten Federschenkel (141) und einem zweiten Federschenkel (142) umfasst, die so vorgespannt sind, dass sie das bewegbare Teil (14) in eine das Ventil (8) schließende erste Stellung überführen, wenn kein externer Druck von der Kette (11) auf das bewegbare Teil (14) ausgeübt wird.

2. Vorrichtung (1) nach Anspruch 1, **dadurch gekennzeichnet, dass** das Ventil (8) das bewegbare Teil (14) umfasst.

3. Vorrichtung (1) nach einem der Ansprüche 1 oder 2, **dadurch gekennzeichnet, dass** die Vorrichtung (1) einen Kopf (3) umfasst, in dem das Ventil (8) zumindest teilweise angeordnet ist, insbesondere wobei das bewegbare Teil (14) in der ersten Stellung so aus dem Kopf (3) oder einem Abschnitt des Kopfes (3) nach unten herausragt, dass es mit einem Abschnitt der Kette (11) in Berührung kommen kann.

4. Vorrichtung (1) nach einem der Ansprüche 1 bis 3, **dadurch gekennzeichnet, dass** die Aufbringmittel (9) so gestaltet sind, dass das bewegbare Teil (14) durch den Kontakt der Vorrichtung (1) mit abwechselnd schmaleren und breiteren Abschnitten (19, 20) der Kette (11) aus der ersten in die zweite Stellung überführt werden kann.

5. Vorrichtung (1) nach einem der Ansprüche 1 bis 4, **dadurch gekennzeichnet, dass** das bewegbare Teil (14) an seinem in Gebrauchsstellung der Kette (11) zugewandten Ende eine Verdickung (15) und/oder eine abgerundete, insbesondere im Wesentlichen halbkugelförmige, Kontur aufweist, vorzugsweise eine abschnittsweise halbkugelförmige Verdickung (15), aufweist.

6. Vorrichtung (1) nach einem der Ansprüche 1 bis 5, **dadurch gekennzeichnet, dass** das bewegbare Teil (14) integral mit dem Federelement (140) ausgebildet ist.

7. Vorrichtung (1) nach einem der Ansprüche 1 bis 6, **dadurch gekennzeichnet, dass** an einem freien Ende des zweiten Federschenkels (142) ein Klemmabschnitt (143) ausgebildet ist, mittels dessen das Federelement (140) klemmend innerhalb des Kopfes (3) des Behälters (2) festgelegt ist.

8. Vorrichtung (1) nach Anspruch 7, **dadurch gekennzeichnet, dass** der Klemmabschnitt (143) so ausgebildet ist, dass er unter eine Gewindeflanke eines Innengewindes (31), das an einer Innenseite des Kopfes (3) ausgebildet ist, greift.

9. Vorrichtung nach einem der Ansprüche 1 bis 8, **dadurch gekennzeichnet, dass** die beiden Federschenkel (141, 142) im montierten Zustand einen Winkel zwischen etwa 35° und etwa 45° miteinander einschließen.

10. Vorrichtung (1) nach einem der Ansprüche 3 bis 9, **dadurch gekennzeichnet, dass** das bewegbare Teil (14) an seinem in Gebrauchsstellung der Kette (11) zugewandten Ende ein Verschlussorgan (144) aufweist, das in eine Auslassöffnung (30) des Kopfes (3) eingreift.

11. Vorrichtung (1) nach Anspruch 10, **dadurch gekennzeichnet, dass** an einer Außenseite des Verschlussorgans (144) eine Anzahl von Riefen (145a, 145b, 145c, 145d) ausgebildet ist, die sich in Längsrichtung des Verschlussorgans (144) erstrecken.

12. Vorrichtung (1) nach einem der Ansprüche 10 oder 11, **dadurch gekennzeichnet, dass** das bewegbare Teil (14) einen innenliegenden Kopf (146) aufweist, dessen Außendurchmesser größer als der Innendurchmesser der Auslassöffnung (30) ist, wobei der Kopf (146) in einer geschlossenen Stellung des Ventils (8) an einem inneren Rand der Auslassöffnung (30) anliegt.

13. Vorrichtung (1) nach einem der Ansprüche 1 bis 12, **dadurch gekennzeichnet, dass** die Vorrichtung (1) Führungsmittel (5) umfasst, die bei Bewegung der Vorrichtung (1) relativ zu der Kette (11) in Längsrichtung der Kette (11) die Vorrichtung (1) in einer Stellung halten, in der die Aufbringmittel (9) mit der Kette (11) in Kontakt gelangen können, wobei die Führungsmittel (5) insbesondere an den Außenseiten der Kette (11) anliegen können.

14. Vorrichtung (1) nach Anspruch 13, **dadurch gekennzeichnet, dass** die Führungsmittel (5) zwei Laschen (6) und/oder eine Aussparung (7) umfassen, durch die sich die Kette (11) hindurch erstrecken kann.

15. Vorrichtung (1) nach einem der Ansprüche 3 bis 14, **dadurch gekennzeichnet, dass** der Kopf (3) eine Öffnung (24) aufweist, durch die Öl von dem Behälter (2) zu dem Ventil (8) fließen kann und/oder dass die Vorrichtung (1) Vordosiermittel umfasst, mit denen insbesondere eine Menge des in dem Behälter (2) befindlichen Öls für den Austritt auf die Kette (11) zur Verfügung gestellt werden kann, vorzugsweise wobei die Vordosiermittel in dem Behälter (2) angeordnet sind.

## Claims

1. Device (1) for applying oil to a chain (11) of a two-wheeled vehicle, in particular a bicycle (10), comprising
- a container (2) for the oil to be applied;
- an outlet through which the oil can exit the container (2);
- application means (9) configured so as to open and close the outlet repeatedly during a movement of the device (1) relative to the chain (11) in the longitudinal direction of the chain (11) such that the oil contained in the container (2) is applied in portions to the chain (11), wherein the application means (9) comprise a movable part (14) which can be moved, preferably away from the chain (11), by, in particular, projecting parts of the chain (11), thereby opening the outlet, and
- a valve (8) which forms the outlet,
**characterised in that** the valve (8) comprises a spring member (140) having a first spring leg (141) and a second spring leg (142) which are biased so as to transfer the movable part (14) to a first position closing the valve (8) when no external pressure is exerted from the chain (11) on the movable member (14).

2. Device (1) according to claim 1, **characterised in that** the valve (8) comprises the movable part (14).

3. Device (1) according to any one of claims 1 or 2, **characterised in that** the device (1) comprises a head (3) in which the valve (8) is at least partially arranged, in particular wherein the movable part (14) in the first position projects downwards from the head (3) or a portion of the head (3) in such a way that it can come into contact with a portion of the chain (11).

4. Device (1) according to any one of claims 1 to 3, **characterised in that** the application means (9) are configured such that the movable part (14) can be transferred from the first to the second position by the contact of the device (1) with alternately narrower and wider sections (19, 20) of the chain (11).

5. Device (1) according to any one of claims 1 to 4, **characterised in that** the movable part (14) has at its end facing the chain (11) in the use position a thickening (15) and/or a rounded, in particular substantially hemispherical, contour, preferably a hemispherical thickening (15) in sections.

6. Device (1) according to any one of claims 1 to 5, **characterised in that** the movable part (14) is integrally formed with the spring element (140).

7. Device (1) according to any one of claims 1 to 6, **characterised in that** at a free end of the second spring leg (142), a clamping section (143) is formed by means of which the spring element (140) is fixed clampingly inside the head (3) of the container (2).

8. A device (1) according to claim 7, **characterised in that** the clamping portion (143) is configured to engage under a thread flank of an internal thread (31) formed on an inner side of the head (3).

9. Device according to any one of claims 1 to 8, **characterised in that** the two spring legs (141, 142) in the assembled state enclose an angle between about 35° and about 45° with one another.

10. Device (1) according to any one of claims 3 to 9, **characterised in that** the movable part (14) comprises, at its end facing the chain (11) in the position of use, a closure member (144) which engages in an outlet opening (30) of the head (3).

11. Device (1) according to claim 10, **characterised in that**, on an outer side of the closure member (144), a number of grooves (145a, 145b, 145c, 145d) which extend in the longitudinal direction of the closure member (144), are formed.

12. Device (1) according to any one of claims 10 or 11, **characterised in that** the movable part (14) has an inner head (146) whose outer diameter is greater than the inner diameter of the outlet opening (30), wherein the head (146), in a closed position of the valve (8), is in contact with an inner edge of the outlet opening (30).

13. Device (1) according to any one of claims 1 to 12, **characterised in that** the device (1) has guide means (5) which, when the device (1) moves relative to the chain (11) in the longitudinal direction of the chain (11), hold the device (1) in a position in which the application means (9) can come into contact with the chain (11), wherein the guide means (5) can come into contact in particular with the outer sides of the chain (11).

14. Device (1) according to claim 13, **characterised in that** the guide means (5) has two lugs (6) and/or a recess (7) through which the chain (11) can extend.

15. Device (1) according to any of claims 3 to 14, **characterised in that** the head (3) has an opening (24) through which oil can flow from the container (2) to the valve (8) and/or in that the device (1) has pre-dosing means, with which in particular a quantity of the oil contained in the container (2) can be made available for discharge onto the chain (11), preferably wherein the pre-dosing means are arranged in the container (2).

## Revendications

1. Dispositif (1) pour l'application d'huile sur une chaîne (11) d'un véhicule à deux-roues, en particulier d'une bicyclette (10), comprenant
- un récipient (2) pour l'huile à appliquer,
- une sortie par laquelle l'huile peut sortir du récipient (2),
- des moyens d'application (9) qui sont conçus de sorte qu'ils ouvrent et ferment de manière répétée la sortie pendant un mouvement du dispositif (1) par rapport à la chaîne (11) dans le sens longitudinal de la chaîne (11) de sorte que l'huile se trouvant dans le récipient (2) soit appliquée par portions sur la chaîne (11), dans lequel les moyens d'application (9) comprennent une partie mobile (14) qui peut être déplacée par des parties de la chaîne (11) dépassant en particulier, de préférence déplacée loin de la chaîne (11) de sorte que la sortie soit ainsi ouverte, ainsi que
- une soupape (8) qui forme la sortie,
**caractérisé en ce que** la soupape (8) comprend un élément de ressort (140) avec une première branche de ressort (141) et une seconde branche de ressort (142) qui sont précontraintes de sorte qu'elles transfèrent la partie mobile (14) dans une première position fermant la soupape (8) lorsqu'aucune pression externe n'est exercée par la chaîne (11) sur la partie mobile (14).

2. Dispositif (1) selon la revendication 1, **caractérisé en ce que** la soupape (8) comprend la partie mobile (14).

3. Dispositif (1) selon l'une des revendications 1 ou 2, **caractérisé en ce que** le dispositif (1) comprend une tête (3), dans laquelle la soupape (8) est agencée au moins partiellement, en particulier dans lequel la partie mobile (14) dépasse dans la première position de la tête (3) ou d'une section de la tête (3) vers le bas de sorte qu'elle puisse entrer en contact avec une section de la chaîne (11).

4. Dispositif (1) selon l'une des revendications 1 à 3, **caractérisé en ce que** les moyens d'application (9) sont conçus de sorte que la partie mobile (14) puisse être transférée par le contact du dispositif (1) avec des sections (19, 20) plus étroites et plus larges en alternance de la chaîne (11) de la première à la seconde position.

5. Dispositif (1) selon l'une des revendications 1 à 4, **caractérisé en ce que** la partie mobile (14) présente à son extrémité tournée en position d'utilisation de la chaîne (11) un épaississement (15) et/ou un contour arrondi, en particulier sensiblement en forme d'hémisphère, de préférence présente un épaississement (15) en forme d'hémisphère par section.

6. Dispositif (1) selon l'une des revendications 1 à 5, **caractérisé en ce que** la partie mobile (14) est réalisée d'un seul tenant avec l'élément de ressort (140).

7. Dispositif (1) selon l'une des revendications 1 à 6, **caractérisé en ce qu'**à une extrémité libre de la seconde branche de ressort (142) une section de serrage (143) est réalisée, au moyen de laquelle l'élément de ressort (140) est fixé par serrage à l'intérieur de la tête (3) du récipient (2).

8. Dispositif (1) selon la revendication 7, **caractérisé en ce que** la section de serrage (143) est réalisée de sorte qu'elle saisisse sous un flanc fileté d'un filet intérieur (31) qui est réalisé au niveau d'un côté intérieur de la tête (3).

9. Dispositif selon l'une des revendications 1 à 8, **caractérisé en ce que** les deux branches de ressort (141, 142) forment à l'état monté un angle entre environ 35° et environ 45° entre elles.

10. Dispositif (1) selon l'une des revendications 3 à 9, **caractérisé en ce que** la partie mobile (14) présente au niveau de son extrémité tournée dans la position d'utilisation vers la chaîne (11), un organe de fermeture (144) qui vient en prise dans une ouverture de sortie (30) de la tête (3).

11. Dispositif (1) selon la revendication 10, **caractérisé en ce qu'**un nombre de stries (145a, 145b, 145c, 145d) est réalisé au niveau d'un côté extérieur de l'organe de fermeture (144), lesquelles s'étendent dans le sens longitudinal de l'organe de fermeture (144).

12. Dispositif (1) selon l'une des revendications 10 ou 11, **caractérisé en ce que** la partie mobile (14) présente une tête intérieure (146) dont le diamètre extérieur est supérieur au diamètre intérieur de l'ouverture de sortie (30), dans lequel la tête (146) repose dans une position fermée de la soupape (8) contre un bord intérieur de l'ouverture de sortie (30).

13. Dispositif (1) selon l'une des revendications 1 à 12, **caractérisé en ce que** le dispositif (1) comprend des moyens de guidage (5) qui maintiennent, lors du déplacement du dispositif (1) par rapport à la chaîne (11) dans le sens longitudinal de la chaîne (11), le dispositif (1) dans une position dans laquelle les moyens d'application (9) peuvent parvenir en contact avec la chaîne (11), dans lequel les moyens de guidage (5) peuvent reposer en particulier contre les côtés extérieurs de la chaîne (11).

14. Dispositif (1) selon la revendication 13, **caractérisé en ce que** les moyens de guidage (5) comprennent deux languettes (6) et/ou un évidement (7) au travers duquel la chaîne (11) peut s'étendre.

15. Dispositif (1) selon l'une des revendications 3 à 14, **caractérisé en ce que** la tête (3) présente une ouverture (24) par laquelle de l'huile peut s'écouler du récipient (2) à la soupape (8) et/ou que le dispositif (1) comprend des moyens de prédosage, avec lesquels en particulier une quantité de l'huile se trouvant dans le récipient (2) peut être mise à disposition pour la sortie sur la chaîne (11), de préférence dans lequel les moyens de prédosage sont agencés dans le récipient (2).
